Europäisches Patentamt

European Patent Office

Office européen des brevets

(11) Veröffentlichungsnummer: **0 212 405**
**A1**

(12) **EUROPÄISCHE PATENTANMELDUNG**

(21) Anmeldenummer: 86110715.9

(22) Anmeldetag: 02.08.86

(51) Int. Cl.⁴: **G09B 29/04**

(30) Priorität: 10.08.85 DE 3528740
30.04.86 DE 3614759

(43) Veröffentlichungstag der Anmeldung:
04.03.87 Patentblatt 87/10

(84) Benannte Vertragsstaaten:
AT CH DE FR GB LI

(71) Anmelder: **Schmidt, Hans-Jürgen, Dipl.-Kfm.,**
**Lenbachstrasse 6**
**D-4800 Bielefeld 1(DE)**

(72) Erfinder: **Schmidt, Hans-Jürgen, Dipl.-Kfm.,**
**Lenbachstrasse 6**
**D-4800 Bielefeld 1(DE)**

(74) Vertreter: **Patentanwälte Dipl.-Ing. Bodo**
**Thielking Dipl.-Ing. Otto Elbertzhagen**
**Gadderbaumer Strasse 20**
**D-4800 Bielefeld 1(DE)**

(54) **Karte, insbesondere Stadtplan.**

(57) Bei einer Karte, insbesondere einem Stadtplan sind in horizontaler und vertikaler Richtung nebeneinander angeordnete Felder vorgesehen, die über horizontale und vertikale Falzlinien miteinander verbunden sind. Einige Falzlinien sind jeweils im Randbereich geschlitzt. Die Schlitze erstrecken sich auf einer durchgehenden Falzlinie von beiden einander gegenüberliegenden Randbereichen jeweils bis zum ungeschlitzten Mittelbereich über mindestens zwei Felder. Die von den Schlitzen bzw. den Kartenrändern eingeschlossenen Bereiche sind über rückwärtige Laschenbereiche mit dem ungeschlitzten Mittelbereich verbunden, wobei die die Laschenbereiche voneinander trennenden Aussparungen jeweils kürzer sind als die Schlitze der Vorderseite des Plans. Die Karte kann einen separaten Umschlag sowie einen integrierten, durch die Rückseite von seitlichen Feldern des ungeschlitzten Mittelbereichs gebildeten Umschlag aufweisen.

fig. 1

<center>Karte, insbesondere Stadtplan</center>

Die Erfindung betrifft eine Karte, insbesondere einen Stadtplan mit einem Umschlag, an dem in horizontaler und vertikaler Richtung nebeneinander angeordnete Felder befestigt sind, die über horizontale und vertikale Falzlinien miteinander verbunden sind, wobei jeweils im Randbereich die Falzlinien geschlitzt sind und Schlitze auf einer durchgehenden Falzlinie von beiden einander gegenüberliegenden Randbereichen bis zum ungeschlitzten Mittelbereich sich über mindestens zwei Felder erstrecken.

Bei einer bekannten Karte dieser Art erweist es sich als nachteilig, daß deren Stabilität durch die Schlitze deutlich leidet. Es besteht beim Gebrauch dieser Karte die Gefahr, daß die geschlitzten Kartenbereiche unbeabsichtigt zurückfallen. Das Schlitzen der Karte im Randbereich ist aus technischen Gründen jedoch unerläßlich, damit ein Umblättern auf kleinem Sektor, also bei klein gehaltener Grundfläche erfolgen kann. Das geschilderte Problem tritt unabhängig davon auf, ob die Schlitze jeweils vom oberen und unteren oder den beiden seitlichen Randbereichen zum ungeschlitzten Mittelbereich verlaufen.

Ausgehend von diesem Stand der Technik liegt der Erfindung die Aufgabe zugrunde, einen Plan zu schaffen, der ein Umblättern auf kleiner Grundfläche erlaubt, der aber dennoch eine vergleichsweise große Stabilität aufweist.

Die Lösung dieser Aufgabe erfolgt dadurch, daß die von den Schlitzen bzw. den Kartenrändern eingeschlossenen Felder über rückwärtige Laschenbereiche mit dem ungeschlitzten Mittelbereich der Karte verbunden sind, wobei die die Laschenbereiche voneinander trennenden Aussparungen jeweils kürzer sind als die Schlitze des Plans.

Bei einer bevorzugten Ausführungsform ist der Umschlag durch die Rückseiten von seitlichen Feldern des ungeschlitzten Mittelbereichs gebildet. Bei dieser Ausführungsform ist also der Umschlag integriert und nicht als separates Teil ausgebildet.

Ferner hat es sich als zweckmäßig erwiesen, daß die Rückseiten der seitlichen Felder des ungeschlitzten Mittelbereichs durch mit den Vorderseiten verklebte Papierfelder gebildet sind.

Weiterhin hat es sich als zweckmäßig erwiesen, daß sich die rückseitigen Papierfelder einseitig sowie nach oben und unten in die geschlitzten Bereiche fortsetzen.

Bei einer weiteren bevorzugten Ausführungsform sind die die Laschenbereiche voneinander trennenden Aussparungen unterhalb der Schlitze liegende Trennschlitze.

Dabei ist es ferner zweckmäßig, daß die Laschenbereiche unterhalb des an den ungeschlitzten Mittelbereich anschließenden ersten geschlitzten Feldes über Falzlinien quer zur Schlitzrichtung miteinander verbunden sind.

Bei einer bevorzugten Ausführungsform erstrecken sich die Schlitze über drei Felder, während sich die Trennschlitze auf der Rückseite lediglich über zwei Felder erstrecken.

Bei einer besonderen Ausgestaltung der Erfindung ist der Laschenbereich im Bereich der Falzlinie des zweiten äußeren Feldendes des geschlitzten Bereichs befestigt.

Weitere bevorzugte Ausführungsformen der Erfindung sind in den weiteren Unteransprüchen beschrieben.

Das Vorsehen von rückwärtigen Laschenbereichen, die eine kürzere Schlitzlänge aufweisen als die zugehörigen Darstellungsbereiche, gibt der Karte trotz der Schlitzung eine gute Stabilität und erlaubt gleichwohl eine ebenso einfache Handhabung wie bei einer Schlitzung ohne Verbindungslaschen. Der Plan ist trotz der Schlitze sowohl in Längs-als auch in Querrichtung nahezu ebenso stabil, als wenn die Schlitze vollständig fehlen würden.

Nachstehend werden bevorzugte Ausführungsformen der Erfindung anhand der Zeichnung im einzelnen beschrieben. Es zeigen:

Figur 1 -eine perspektivische Ansicht einer ersten Ausführungsform einer ausgebreiteten Karte,

Figur 2 -eine perspektivische Ansicht einer zweiten Ausführungsform der Karte.

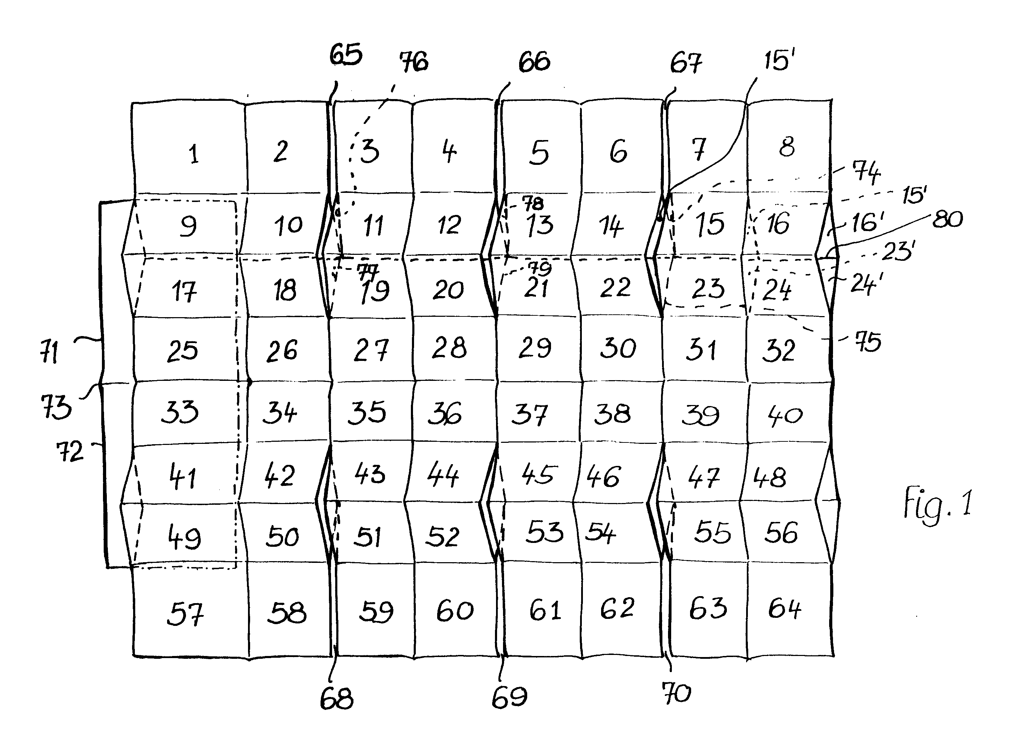

Zunächst zu Figur 1:

Die Karte besitzt eine Vielzahl von Feldern 1 bis 64, die über horizontale und vertikale Falzlinien miteinander verbunden sind. Drei vertikale Falzlinien sind über von unterschiedlichen Randbereichen zum Zentrum verlaufende Schlitze 65 und 68 sowie 66 und 69 und schließlich 67 und 70 getrennt. Die Felder 25 bis 40 im mittleren Bereich der Karte sind über Falzlinien verbunden, die nicht geschlitzt sind. Die Felder 25 und 33 sind mit dem Umschlag verklebt, der aus zwei Umschlagseiten 71 und 72 besteht, die über eine gemeinsame Falzlinie 73 verbunden sind.

Unterhalb der Felder der geschlitzten Bereiche sind rückwärtige Laschenbereiche vorgesehen, die im dargestellten Ausführungsbeispiel in der Form und Anordnung den darüberliegenden Feldern entsprechen. Am rechten Ende der Darstellung sind die Laschen 24' und 16' ersichtlich. Der Laschenbereich 24' ist mit dem der Rückseite des Feldes 24 verbunden, der Laschenbereich 16' mit dem Rand des Feldes 16. Im dargestellten Ausführungsbeispiel erstreckt sich die Lasche bis hinter das Feld 8. Entsprechend den rückwärtigen Laschenbereichen 24 und 16 sind benachbarte, über Falzlinien mit 16' und 24' verbundene Laschenbereiche 15' und 23' vorgesehen, die mit dem oberen Rand von Feld 15 bzw. mit der Rückseite von Feld 23 verbunden sind. Zwischen den Feldern 6, 14 und 22 sowie 7, 15 und 23 befindet sich ein Schlitz 67, der sich also über drei Felder erstreckt.

Die rückwärtigen Laschenbereiche 15' und 16' sind lediglich bis zur horizontalen Falzlinie 80 geschlitzt. Der Schlitz 74 erstreckt sich also lediglich über -vom Rand gesehen -zwei Felder, während dem Schlitz zwischen den vorderen Feldern 22 und 23 kein Schlitz sondern eine Falzlinie 75 des rückwärtigen Laschenbereichs entspricht. Die beim Schlitz 67 geschilderte Ausbildung ist ebenso vorhanden bei den übrigen Schlitzen 65, 66, 68, 69 und 70. Bei Schlitz 66 sind der rückwärtige Schlitzbereich mit 78 und die sich anschließende Falzlinie mit 79 bezeichnet. Bei Schlitz 65 sind der rückwärtige Schlitzbereich mit 76 und die sich anschließende Falzlinie mit 77 bezeichnet.

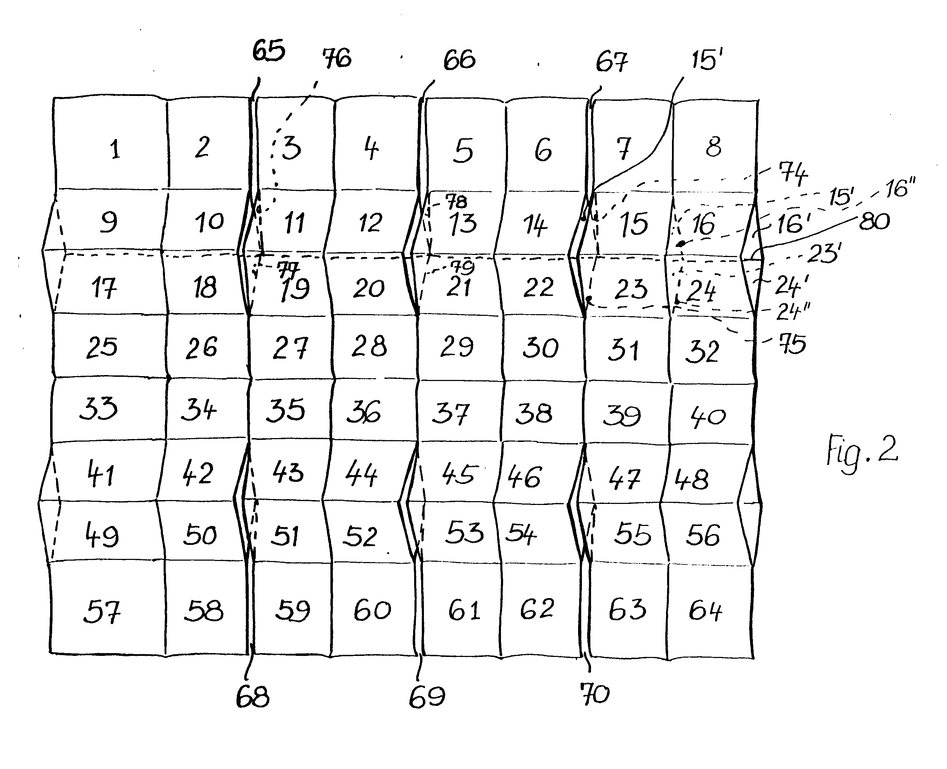

Nun zu Figur 2:

Auch diese Ausführungsform besitzt eine Vielzahl von Feldern 1 bis 64, die über horizontale und vertikale Falzlinien miteinander verbunden sind. Drei vertikale Falzlinien sind über von unterschiedlichen Randbereichen zum Zentrum verlaufende Schlitze 65 und 68 sowie 66 und 69 und - schließlich 67 und 70 getrennt. Die Felder 25 bis 40 im mittleren Bereich der Karte sind über Falzlinien verbunden, die nicht geschlitzt sind. Die Rückseiten der Felder 25 und 33 bilden die Umschlagseite des zusammengefalteten Plans. Diese Rückseiten sind im dargestellten Ausführungsbeispiel durch mit den Vorderseiten verklebte Papierfelder gebildet, die sich einseitig gemäß Zeichnung nach rechts sowie nach oben und unten in die geschlitzten Bereiche fortsetzen. Im dargestellten Ausführungsbeispiel sind alle Felder doppelwandig ausgebildet.

Unterhalb der Felder der geschlitzten Bereiche sind rückwärtige Laschenbereiche vorgesehen, die im dargestellten Ausführungsbeispiel in der Form und Anordnung den darüberliegenden Feldern entsprechen. Am rechten Ende der Darstellung sind die Laschen 24' und 16' ersichtlich. Der Laschenbereich 24' ist mit dem der Rückseite des Feldes 24 verbunden, der Laschenbereich 16' mit dem Rand des Feldes 16.

Im dargestellten Ausführungsbeispiel erstreckt sich die Lasche bis hinter das Feld 8. Entsprechend den rückwärtigen Laschenbereichen 24' und 16' sind benachbarte, über Falzlinien 16" und 24" verbundene Laschenbereiche 15' und 23' vorgesehen, die mit dem oberen Rand von Feld 15 bzw. mit der Rückseite von Feld 23 verbunden sind. Zwischen den Feldern 6, 14 und 22 sowie 7, 15 und 23 befindet sich ein Schlitz 67, der sich also über drei Felder erstreckt.

Die rückwärtigen Laschenbereiche 15' und 16' sind lediglich bis zur horizontalen Falzlinie 80 geschlitzt. Der Schlitz 74 erstreckt sich also lediglich über -vom Rand aus gesehen -zwei Felder, während dem Schlitz zwischen den vorderen Feldern 22 und 23 kein Schlitz sondern eine Falzlinie 75 des rückwärtigen Laschenbereichs entspricht.

Die im Zusammenhang mit Schlitz 67 geschilderte Ausbildung ist ebenso vorgesehen bei den übrigen Schlitzen 65, 66, 68, 69 und 70. Bei Schlitz 66 sind der rück wärtige Schlitzbereich mit 78 und die sich anschließende Falzlinie mit 79 bezeichnet. Bei Schlitz 65 sind der rückwärtige Schlitzbereich mit 76 und die sich anschließende Falz mit 77 bezeichnet.

**Ansprüche**

1. Karte, insbesondere Stadtplan, mit einem Umschlag, an dem in horizontaler und vertikaler Richtung nebeneinander angeordnete Felder befestigt sind, die über horizontale und vertikale Falzlinien miteinander verbunden sind, wobei jeweils im Randbereich die Falzlinien geschlitzt und Schlitze auf einer durchgehenden Falzlinie von beiden einander gegenüberliegenden Randbereichen bis zum ungeschlitzten Mittelbereich sich über mindestens zwei Felder erstrecken,

dadurch gekennzeichnet,

daß die von den Schlitzen (65; 66; 67; 68; 69; 70) bzw. den Kartenrändern eingeschlossenen Felder - (16, 24) über rückwärtige Laschenbereiche (16', 24') mit dem ungeschlitzten Mittelbereich (31, 32, 39, 40) der Karte verbunden sind, wobei die die Laschenbereiche voneinander trennenden Aussparungen (74, 76, 78) jeweils kürzer sind als die Schlitze (67) des Plans.

2. Karte nach Anspruch 1,

dadurch gekennzeichnet,

daß der Umschlag durch die Rückseiten von seitlichen Feldern (23; 33) des ungeschlitzten Mittelbereichs gebildet ist.

3. Karte nach Anspruch 1 oder 2,

dadurch gekennzeichnet,

daß die Rückseiten der seitlichen Felder (25; 33) des ungeschlitzten Mittelbereichs durch mit den Vorderseiten verklebte Papierfelder gebildet sind.

4. Karte nach einem oder mehreren der Ansprüche 1 bis 3,

dadurch gekennzeichnet,

daß die rückseitigen Papierfelder sich einseitig in den ungeschlitzten Mittelbereich sowie nach oben und unten in die geschlitzten Bereiche fortsetzen.

5. Karte nach einem oder mehreren der Ansprüche 1 bis 4,

dadurch gekennzeichnet,

daß die die Laschenbereiche voneinander trennenden Aussparungen (74, 76, 78) unterhalb der Schlitze (65; 66; 67; 68; 69; 70) liegende Trennschlitze (76; 78; 74) sind.

6. Karten nach einem oder mehreren der Ansprüche 1 bis 5,

dadurch gekennzeichnet,

daß die Laschenbereiche unterhalb des an den ungeschlitzten Mittelbereich anschließenden ersten geschlitzten Feldes (23') über Falzlinien (75) quer zur Schlitzrichtung miteinander verbunden sind.

7. Karte nach einem oder mehreren der Ansprüche 1 bis 6,

dadurch gekennzeichnet,

daß die Schlitze (65; 66; 67; 68; 69; 70) sich über drei Felder erstrecken, während die Trennschlitze (76; 78; 74) auf der Rückseite sich lediglich über zwei Felder erstrecken.

8. Karte nach einem oder mehreren der Ansprüche 1 bis 7,

dadurch gekennzeichnet,

daß der Laschenbereich (16') im Bereich der Falzlinie (80) des zweiten äußeren Feldendes des geschlitzten Bereichs befestigt ist.

9. Karte nach einem oder mehreren der Ansprüche 1 bis 8,

dadurch gekennzeichnet,

daß die rückwärtigen Laschenbereiche (15', 16', 23', 24') mit den Feldern der Karte verklebt sind.

10. Karte nach einem oder mehreren der Ansprüche 1 bis 9,

dadurch gekennzeichnet,

daß der Laschenbereich einerseits mit dem ungeschlitzten Mittelbereich und andererseits mit dem Randbereich verklebt ist.

11. Karte nach einem oder mehreren der Ansprüche 1 bis 10,

dadurch gekennzeichnet,

daß die Schlitze (65; 66; 67; 68; 69; 70) jeweils zwei Felder begrenzen.

Fig. 1

0 212 405

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-2 615 732 (G. FALK)<br>* Spalte 2, Zeilen 17-34; Figur 3 * | 1,3 | G 09 B 29/04 |
| | --- | | |
| A | FR-A- 789 167 (SOCIETE TARIDE)<br>* Seite 1; Figuren * | 1,3 | |
| | ----- | | |

| RECHERCHIERTE SACHGEBIETE (Int. Cl.4) |
|---|
| G 09 B<br>G 09 F |

Der vorliegende Recherchenbericht wurde für alle Patentansprüche erstellt.

| Recherchenort | Abschlußdatum der Recherche | Prüfer |
|---|---|---|
| DEN HAAG | 09-10-1986 | ODGERS M.L. |